# EUROPEAN PATENT SPECIFICATION

(11) **EP 2 362 812 B1**
(45) Date of publication and mention of the grant of the patent: **14.06.2017**
(21) Application number: 09785290.9
(22) Date of filing: 09.07.2009
(51) Int. Cl.: B01L 9/00, G06K 7/00

(54) **LABORATORY SAMPLE CARRIER TRAY AND TRACKING METHOD**
LABORPROBENTRÄGER UND VERFOLGUNGSVERFAHREN
PLATEAU DE SUPPORT POUR ÉCHANTILLONS DE LABORATOIRE ET PROCÉDÉ DE SUIVI

(30) Priority: 09.07.2008 GB 0812541
(43) Date of publication of application: 07.09.2011
(73) Proprietor: Raymond A Lamb Limited, Manor Park Runcorn Cheshire WA7 1TA (GB)
(72) Inventor: HUGHES, Thomas Fergus, Netherfield TN33 9QL (GB)
(74) Representative: Johnstone, Douglas Ian
(86) International application number: PCT/GB2009/050811
(87) International publication number: WO 2010/004332

(56) References cited:
- WO-A-00/16280
- WO-A-2005/042146
- US-A- 5 936 527

## Description

The present invention relates to tracking the movement of laboratory sample carriers in the form of slides, cassettes and the like and in particular to a tray for transporting such carriers and an associated method.

Laboratory sample carriers may be provided with radio frequency identification (RFID) means usually in the form of an RFID tags for facilitating tracking the movement of the carriers. Due to size constraints the RFID tags employed for such purposes are generally so-called passive RFID tags which included no power source and require activation by an RFID reader antenna which supplies sufficient radio frequency energy to activate the RFID tag and cause it to emit a relatively weak signal. When such carriers are to be transported around a laboratory they are often placed on trays and a hand-held reader antenna may be used to activate and read the RFID tags of the carriers. Such hand-held readers have a relatively short range. Accordingly using a hand-held reader is a time consuming operation and requires an operator to make a conscious decision to carry out a reading operation. Longer range readers are available but their use requires complex anti-collision software and, because they will detect RFID tags over a relatively wide area, it is difficult to interpret the information that they provide for work flow tracking.

WO 00/16280, on which the preamble of claim 1 is based, discloses a storage unit consisting of a drawer for holding containers, wherein each container can hold a key and has an RFID tag. The drawer contains a top panel placed on a backplane. The top panel has a series of openings wherein each opening is dimensioned to receive a said container. The backplane has a capacitive plate antenna corresponding to each opening and the antennae are connected to a controller via a matrix selector separate from the backplane. When a container is placed in one of the openings, the antenna for that opening can read information from the RFID tag of the container and the controller tracks and logs removal and replacement of the container.

WO 2005/042146 discloses a tracking system wherein glass slides have RFID transponders and the transponders are read by an RFID interrogator.

An object of the invention is to provide a laboratory sample carrier tray and associated tracking method which overcome at least some of the problems referred to above.

Thus according to a first aspect of the invention there is provided a tray for transporting laboratory sample carriers including radio frequency identification means, the tray comprising an upper portion including positioning means defining a plurality of carrier bays and a lower tray portion, the lower tray portion including radio frequency identification reader antennae positioned to read information from the radio frequency identification means of the carriers when the tray portions are located with respect to each other and electronic processing means connected to the reader antennae, characterized in that the upper portion is an upper tray portion having a base with an upper surface, the positioning means being in the form of upstanding walls which divide the upper surface into said carrier bays; and the tray portions include locating means for locating the upper tray portion in an overlying relationship with respect to the lower tray portion. With such a tray an operator does not need to consciously read each individual carrier. Merely by placing the carrier on the tray, information from the RFID tags associated with the carriers will be recorded by the electronic processing means. In order to meet cleanliness requirements it is desirable to be able to dispose of items which the carriers come into direct contact with and due to the two-part nature of the tray the upper tray portion can be manufactured as a disposable item.

Conveniently each carrier bay is configured to accommodate a single carrier and the lower tray portion includes one said reader antenna positioned to underlie each of the carrier bays when the tray portions are located with respect to each other.

In order that the tray can operate to record information from the RFID tags without connection to an external power source, the lower tray portion preferably further includes a battery for powering the electronic processing means.

Preferably the battery is a rechargeable battery and the lower tray portion further includes a battery recharging connection.

In order that the tray itself can be identified, preferably the upper tray portion further includes a radio frequency identification means and the lower tray portion includes an additional radio frequency identification reader antenna, connected to the electronic processing means and arranged to obtain information from the radio frequency identification means comprising part of the upper tray portion.

As it is desirable for the movements of plural trays in a laboratory to be monitored, the lower tray portion preferably further includes means for transferring information from the electronic processing means to an external device. The means for transferring information may be configured to transfer information via a wired connection and take the form of a USB or other serial or parallel connection lead or a docking attachment. Alternatively the means for transferring information may be configured to transfer information via a wireless connection.

The invention also provides a tray as set out above in combination with a docking station, the lower tray portion and the docking station respectively including complementary first and second docking attachments configured to allow downloading of information from the electronic processing means to or via the docking station. With such a combination a laboratory may be provided with a central computer connected to one or more docking stations and information concerning the samples carried by a particular tray can be downloaded to the computer simply by engaging the docking attachment of the tray with that of one of the docking stations.

According to a second aspect of the invention there is provided a method of tracking laboratory sample carriers including radio frequency identification means, the method including: providing a tray comprising an upper tray portion and a lower tray portion, the upper tray portion having a base with an upper surface, and positioning means in the form of upstanding walls which divide the upper surface into carrier bays; locating the upper tray portion in an overlying relationship with the lower tray portion by means of locating means of the tray portions; positioning sample carriers in the carrier bays of the upper tray portion; reading information from the radio frequency identification means of the carriers by means of radio frequency identification reader antennae of the lower tray portion; and storing the information by means of an electronic processing means of the lower tray portion which is connected to the reader antennae.

The method preferably comprises the further step of powering the electronic processing means by a battery forming part of the lower tray portion.

The method may also include the further step of reading information from a further radio frequency identification means forming part of the upper tray portion by means of a further reader antenna forming part of the lower tray portion and connected to the electronic processing means and storing this information in the electronic processing means.

The method preferably also includes the further step of communicating the stored information from the electronic processing means to an external device. This may conveniently be achieved by engaging a first docking attachment of the lower tray portion with a complementary second docking attachment of a docking station. Alternatively this may be achieved by transmitting the stored information wirelessly to the external device.

The invention will now be described by way of example only with reference to the accompanying schematic drawings in which:
Figure 1 shows a cross-section through a tray according to the invention with an upper and lower portions thereof separated from each other;
Figure 2 shows a perspective view of end portions of the separated tray portions shown in Figure 1;
Figure 3 shows a perspective view of plural trays according to the invention communicating with a computer both wirelessly and via a docking station;
Figure 4 shows a tray according to the invention in combination with apparatus for ascertaining the location of the tray.

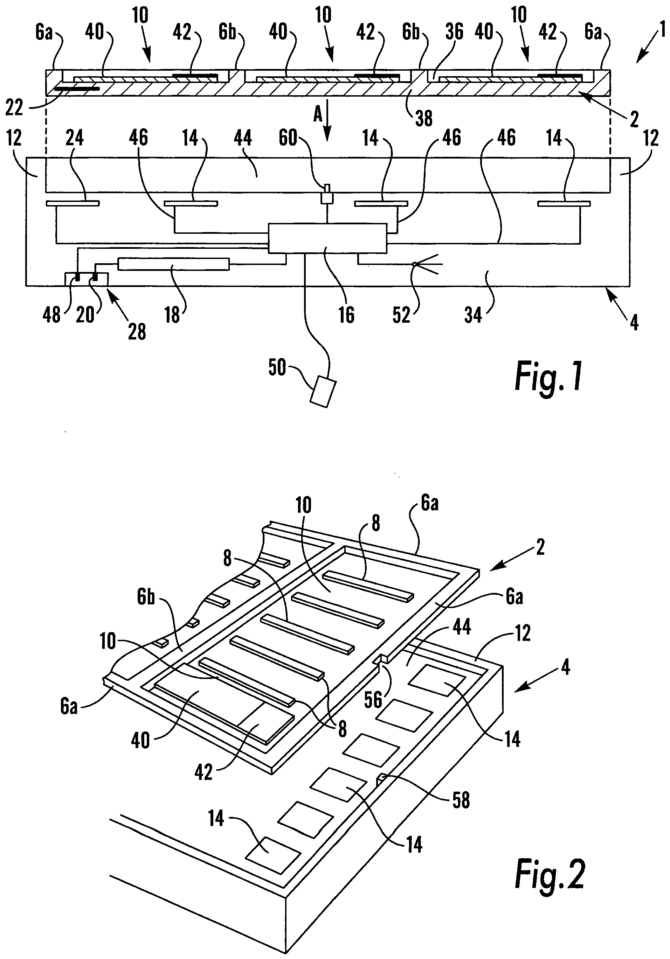

The tray 1 according to the invention shown in Figure 1 includes an upper tray portion 2 and a lower tray portion 4. The lower tray portion 4 includes a base 34 with an upstanding rib 12 which projects upwardly from a perimeter of the base 34 and constitutes a locating means for locating the upper tray portion 2 in an overlying relationship with the lower tray portion 4. Complementary keying portions 56 and 58 are provided on the upper and lower tray portions respectively for determining the orientation of the tray portions 2 and 4 with respect to each other when they are engaged.

The upper tray portion 2 is made from cardboard or plastic and is disposable or semi-disposable. It includes positioning means in the form of upstanding walls 6a, 6b and 8 which divide an upper surface 36 of a base 38 thereof into bays 10 for receiving sample carriers which may be in the form of slides 40. The sample carriers will be referred to below simply as slides 40 for ease of reference. The upstanding walls include a perimeter wall 6a extending around the perimeter of the base 38, first divider walls 6b which divide the upper surface 36 into multi-bay areas and second divider walls 8 which divide the multi-bay areas into individual bays 10 each of which is configured to accommodate a slide 40 lying flat on the base 38. The upper tray portion 2 shown in Figures 1 and 2 is configured to accommodate 18 slides laid out in three rows of six. The tray is adapted for use with slides which each include RFID means in the form of an RFID tag 42. The upper tray portion 2 also includes an RFID means preferably in the form of an RFID tag 22 which enables the upper tray portion 2 itself to be identified.

The lower tray portion 4 includes an upwardly open recess 44 defined by the rib 12 into which the upper tray portion 2 is lowerable in the direction of arrow A shown in Fig. 1. In a position corresponding to each bay 10 of the upper tray portion 2, the lower tray portion includes an RFID reader antenna 14. Each reader antenna 14 is connected to an electronic processing means 16 in the lower tray portion 4 by a wire 46. In a position corresponding to the additional RFID tag 22 of the upper tray portion 2 the lower tray portion is provided with an additional reader antenna 24 which is also connected to the electronic processing means 16 by a wire. The base 34 of the lower tray portion also accommodates a battery 18 which is preferably a rechargeable battery. The battery 18 is connected to the electronic processing means 16 to provide it with power and to a battery recharging connection 20. The battery recharging connection 20 forms part of a first docking attachment 28. The first docking attachment 28 also includes one or more data connection terminals 48 (only one shown in Fig. 1) connected to the electronic processing means for the purpose of downloading data from the electronic processing means.

In addition to or as alternatives for the data connection terminal(s) 48 the lower tray portion may include one or both of a USB or other form of wired connection 50 and a transmitter antenna 52 connected to the electronic processing means.

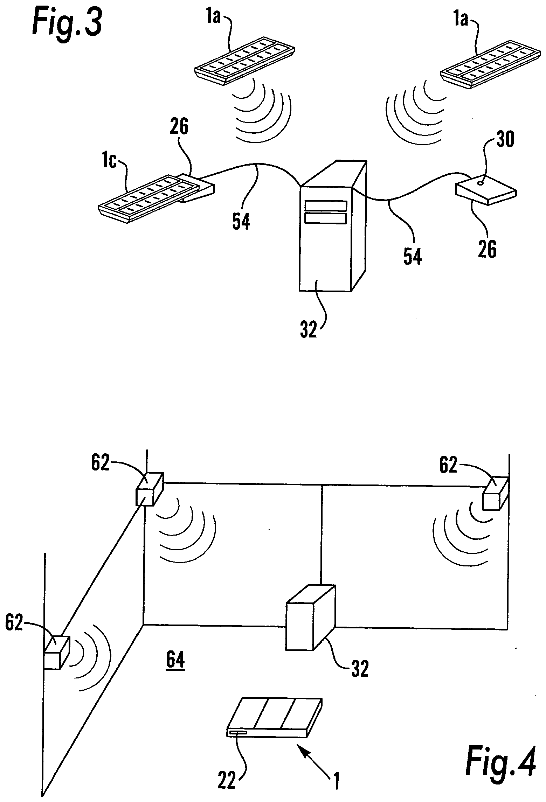

With reference to Figure 3, the tray 1 may be used in combination with one or more docking stations 26 each provided with a second docking attachment 30. Each second docking attachment 30 is configured to be complementary to and engageable with the first docking attachment 28 of the lower tray portion 4 for the purpose of downloading data from the electronic processing means 16 and/or recharging the battery 18. Each docking station 26 can communicate with an external device in the form of a central computer 32 via a wire 54.

In use slides 40, each including an RFID tag 42 containing information concerning the sample supported by the slide, are placed in the bays 10 of the upper tray portion 2, with one slide 40 being placed in each bay 10 and with the ends of the slides including the RFID tags 42 all orientated in the same direction. The upper tray portion 2 is then lowered into the recess 44 of the lower tray portion until its base 38 rests on the base 34 of the lower tray portion. The complementary keying features 56 and 58 on the tray portions ensure that the tray portions are superimposed on each other in one particular orientation so that each slide RFID tag 42 is positioned immediately adjacent to a complementary one of said RFID reader antennae 14 of the lower tray portion 4.

By means of a switch 60, or some other alternative means, the electronic processing means 16 is actuated when the tray portions are engaged with each other and each slide RFID tag is energised by its adjacent reader antenna. Information is thereby obtained from each slide RFID tag 42 by means of its associated reader antenna 14. In this way the RFID tag of each slide is addressed separately. The information obtained is stored by the electronic processing means. The above sequence may be reordered, for example the tray portions 2 and 4 may be engaged with each other prior to placing the slides in the bays 10 of the upper tray portion 2.

The information stored by the electronic processing means 16 can be communicated to an external device such as a computer 32 by various means. Communication may be wireless and effected by means of the transmitter antenna 52 (trays 1a shown in Fig. 3). The communication may alternatively be via a docking station 26 and require the first docking attachment 28 of the lower tray portion to be engaged with the second docking attachment 30 of the docking station 26. In addition to facilitating the downloading of information the docking station 26 may also be used to effect recharging of the battery 18 in a tray docked therewith.

Figure 4 shows a possible enhancement of the method of tracking slides in which a laboratory 64 is provided with position sensors 62 which can sense the position of the RFID tag 22 in the tray 1 and supply this information to the central computer 32. This will enable the central computer to not only record which slide is in which tray but also where the particular tray is in the laboratory.

The tray and method according to the invention, according to the variant used, permit tracking of laboratory samples with no or little operator intervention.

The tray may be used for storing, holding or organising the laboratory sample carriers and/or for reporting on the location of the laboratory sample carriers such as laboratory slides. The tray may be used to transport laboratory sample carriers. The tray may be tracked using triangulation techniques giving real time location of the tray and any laboratory sample carriers within it. The communication elements and electronics are built into the tray.

The tray enables radio frequency identification means or tags of the carriers to be read from and/or written to. The reader antenna 14 may be able to write information to the tags. The tray may comprise an antenna, a reader and electronics required to read from and/or write to the tags. The reader comprises part of the reader antenna 14. Alternatively, the reader may comprise part of the electronic processing means 16.

The tray may be interrogated as an integral part of a tracking system. Data from the radio frequency identification means of the carrier(s) may be sent to and received from the tracking system.

## Claims

1. Tray (1) for transporting laboratory sample carriers (40) including radio frequency identification means (42), the tray (1) comprising an upper tray portion (2) including positioning means (6a, 6b, 8) defining a plurality of carrier bays (10) and a lower tray portion (4), the lower tray portion (4) including radio frequency identification reader antennae (14) positioned to read information from the radio frequency identification means (42) of the carriers (40) when the tray portions (2, 4) are located with respect to each other and electronic processing means (16) connected to the reader antennae (14),
**characterized in that**
the upper tray portion (2) has a base (38) with an upper surface (36), the positioning means being in the form of upstanding walls (6a, 6b, 8) which divide the upper surface (36) into said carrier bays (10); and
the tray portions (2, 4) include locating means (12) for locating the upper tray portion (2) in an overlying relationship with respect to the lower tray portion (4).

2. The tray according to claim 1, wherein the reader antennae (14) are positioned to correspond with the carrier bays (10) when the tray portions (2, 4) are located with respect to each other.

3. The tray according to claim 1 or 2, wherein each carrier bay (10) is configured to accommodate a single carrier (40) and the lower tray portion (4) includes one said reader antenna (14) positioned to underlie each of the carrier bays (10) when the tray portions (2, 4) are located with respect to each other.

4. The tray according to claim 1, 2 or 3, wherein the lower tray portion (4) further includes a battery (18) for powering the electronic processing means (16).

5. The tray according to claim 4, wherein the battery (18) is a rechargeable battery and the lower tray portion (4) further includes a battery recharging connection (20).

6. The tray according to any preceding claim, wherein the upper tray portion (2) further includes a radio frequency identification means (22) and the lower tray portion (4) includes an additional radio frequency identification reader antenna (24) connected to the electronic processing means (16) and arranged to obtain information from the radio frequency identification means (22) comprising part of the upper tray portion (2).

7. The tray according to any preceding claim, wherein the lower tray portion (4) further includes means (48) for transferring information from the electronic processing means (16) to an external device.

8. The tray according to claim 7, wherein the means for transferring information is configured to transfer information via a wired connection (50) or via a wireless connection.

9. The tray (1) according to any preceding claim in combination with a docking station (26), the lower tray portion (4) and the docking station (26) respectively including complementary first and second docking attachments (30) configured to allow downloading of information from the electronic processing means (16) to or via the docking station (26).

10. A method of tracking laboratory sample carriers (40) including radio frequency identification means (42), the method including: providing a tray (1) comprising an upper tray portion (2) and a lower tray portion (4), the upper tray portion (2) having a base (38) with an upper surface (36), and positioning means in the form of upstanding walls (6a, 6b, 8) which divide the upper surface (36) into carrier bays (10); locating the upper tray portion (2) in an overlying relationship with the lower tray portion (4) by means of locating means (12) of the tray portions; positioning sample carriers (40) in the carrier bays (10) of the upper tray portion (2); reading information from the radio frequency identification means (42) of the carriers (40) by means of radio frequency identification reader antennae (14) of the lower tray portion (4); and storing the information by means of an electronic processing means (16) of the lower tray portion (4) which is connected to the reader antennae (14).

11. The method according to claim 10, comprising the further step of powering the electronic processing means (16) by a battery (18) forming part of the lower tray portion (4).

12. The method according to claim 10 or 11, including the further step of reading information from a further radio frequency identification means (22) forming part of the upper tray portion (2) by means of a further reader antenna (24) forming part of the lower tray portion (4) and connected to the electronic processing means (16) and storing this information in the electronic processing means (16).

13. The method according to claim 10, 11 or 12, including the further step of communicating the stored information from the electronic processing means (16) to an external device.

14. The method according to claim 13, wherein communicating the stored information includes the step of engaging a first docking attachment (30) of the lower tray portion (4) with a complementary second docking attachment (30) of a docking station (26).

15. The method according to claim 13, wherein communicating the stored information includes the step of transmitting it wirelessly to the external device.

## Patentansprüche

1. Tablett (1) zum Transportieren von Laborprobenträgern (40), die RFID-Mittel (Radio Frequency Identification) (42) aufweisen, wobei das Tablett (1) einen oberen Tablett-Teil (2), der Positionierungsmittel (6a, 6b, 8) aufweist, die eine Vielzahl von Trägeraufnahmen (10) definieren, und einen unteren Tablett-Teil (4) aufweist, wobei der unteren Tablett-Teil (4) RFID-Leserantennen (14), die zum Lesen von Informationen von den RFID-Mitteln (42) der Träger (40) angeordnet sind, wenn die Tablett-Teile (2, 4) bezüglich zueinander angeordnet sind, und ein elektronisches Verarbeitungsmittel (16) aufweist, das mit den Leserantennen (14) verbunden ist,
**dadurch gekennzeichnet, dass**
der obere Tablett-Teil (2) eine Basis (38) mit einer oberen Oberfläche (36) hat, wobei die Positionierungsmittel in Form nach oben stehender Wände (6a, 6b, 8) sind, welche die obere Oberfläche (36) in die Trägeraufnahmen (10) unterteilen; und
die Tablett-Teile (2, 4) Anordnungsmittel (12) zum Anordnen des oberen Tablett-Teils (2) in einer überlagernden Beziehung zum unteren Tablett-Teil (4) aufweisen.

2. Tablett gemäß Anspruch 1, wobei die Leserantennen (14) so angeordnet sind, dass sie den Trägeraufnahmen (10) entsprechen, wenn die Tablett-Teile (2, 4) bezüglich zueinander angeordnet sind.

3. Tablett gemäß Anspruch 1 oder 2, wobei jede Trägeraufnahme (10) dazu konfiguriert ist, einen einzigen Träger (40) unterzubringen, und an dem unteren Tablett-Teil (4) je eine der Leserantennen (14) so angeordnet ist, dass sie unter einer jeweiligen der Trägeraufnahmen (10) liegt, wenn die Tablett-Teile (2, 4) bezüglich zueinander angeordnet sind.

4. Tablett gemäß Anspruch 1, 2 oder 3, wobei der untere Tablett-Teil (4) ferner eine Batterie (18) zum Versorgen des elektronischen Verarbeitungsmittels (16) mit Strom aufweist.

5. Tablett gemäß Anspruch 4, wobei die Batterie (18) ein Akku ist und der untere Tablett-Teil (4) ferner einen Akku-Ladeanschluss (20) aufweist.

6. Tablett gemäß einem der vorhergehenden Ansprüche, wobei der obere Tablett-Teil (2) ferner ein RFID-Mittel (22) aufweist und der untere Tablett-Teil (4) eine zusätzliche RFID-Leserantenne (24) aufweist, die mit dem elektronischen Verarbeitungsmittel (16) verbunden und dazu angeordnet ist, Informationen von dem RFID-Mittel (22) zu erhalten, das Teil des oberen Tablett-Teils (2) umfasst.

7. Tablett gemäß einem der vorhergehenden Ansprüche, wobei der untere Tablett-Teil (4) ferner ein Mittel (48) zum Übertragen von Informationen von dem elektronischen Verarbeitungsmittel (16) an ein externes Gerät aufweist.

8. Tablett gemäß Anspruch 7, wobei das Mittel zum Übertragen von Informationen dazu konfiguriert ist, Informationen über eine verdrahtete Verbindung (50) oder über eine drahtlose Verbindung zu übertragen.

9. Tablett (1) gemäß einem der vorhergehenden Ansprüche in Kombination mit einer Docking-Station (26), wobei der untere Tablett-Teil (4) und die Docking-Station (26) komplementäre erste bzw. zweite Docking-Anschlüsse (30) aufweisen, die dazu konfiguriert sind, ein Herunterladen von Informationen von dem elektronischen Verarbeitungsmittel (16) an oder über die Docking-Station (26) zu erlauben.

10. Verfahren zum Nachverfolgen von Laborprobenträgern (40), die RFID-Mittel (Radio Frequency Identification) (42) aufweisen, wobei das Verfahren aufweist: Vorsehen eines Tabletts (1), das einen oberen Tablett-Teil (2) und einen unteren Tablett-Teil (4) umfasst, wobei der obere Tablett-Teil (2) eine Basis (38) mit einer oberen Oberfläche (36) und Positionierungsmittel in Form nach oben stehender Wände (6a, 6b, 8) hat, welche die obere Oberfläche (36) in Trägeraufnahmen (10) unterteilen; Anordnen des oberen Tablett-Teils (2) in einer überlagernden Beziehung zum unteren Tablett-Teil (4) mittels Anordnungsmitteln (12) der Tablett-Teile; Anordnen von Probenträgern (40) in den Trägeraufnahmen (10) des oberen Tablett-Teils (2); Lesen von Informationen aus den RFID-Mitteln (42) der Träger (40) mittels RFID-Leserantennen (14) des unteren Tablett-Teils (4); und Speichern der Informationen mittels eines elektronischen Verarbeitungsmittels (16) des unteren Tablett-Teils (4), das mit den Leserantennen (14) verbunden ist.

11. Verfahren gemäß Anspruch 10, umfassend den weiteren Schritt des Versorgens des elektronischen Verarbeitungsmittels (16) mit Strom über eine Batterie (18), die einen Teil des unteren Tablett-Teils (4) bildet.

12. Verfahren gemäß Anspruch 10 oder 11, beinhaltend den weiteren Schritt des Lesens von Informationen von einem weiteren RFID-Mittel (22), das Teil des oberen Tablett-Teils (2) bildet, mittels einer weiteren Leserantenne (24), die Teil des unteren Tablett-Teils (4) bildet und mit dem elektronischen Verarbeitungsmittel (16) verbunden ist, und Speichern dieser Informationen in dem elektronischen Verarbeitungsmittel (16).

13. Verfahren gemäß Anspruch 10, 11 oder 12, aufweisend den weiteren Schritt des Kommunizierens der gespeicherten Informationen von dem elektronischen Verarbeitungsmittel (16) an ein externes Gerät.

14. Verfahren gemäß Anspruch 13, wobei das Kommunizieren der gespeicherten Informationen den Schritt des In-Eingriff-Bringens eines ersten Docking-Anschlusses (30) des unteren Tablett-Teils (4) mit einem komplementären zweiten Docking-Anschluss (30) einer Docking-Station (26) beinhaltet.

15. Verfahren gemäß Anspruch 13, wobei das Kommunizieren der gespeicherten Informationen den Schritt des drahtlosen Übertragens dieser Informationen an das externe Gerät beinhaltet.

## Revendications

1. Plateau (1) pour transporter des supports d'échantillon de laboratoire (40) comportant un moyen d'identification par radiofréquence (42), le plateau (1) comprenant une portion de plateau supérieure (2) comportant des moyens de positionnement (6a, 6b, 8) définissant une pluralité de travées de support (10) et une portion de plateau inférieure (4), la portion de plateau inférieure (4) comportant des antennes de lecteur d'identification par radiofréquence (14) positionnées pour lire des informations provenant du moyen d'identification par radiofréquence (42) des supports (40) lorsque les portions de plateau (2, 4) sont localisées l'une par rapport à l'autre et un moyen de traitement électronique (16) connecté aux antennes de lecteur (14), **caractérisé en ce que**
la portion de plateau supérieure (2) a une base (38) avec une surface supérieure (36), les moyens de positionnement étant sous forme de parois droites (6a, 6b, 8) qui divisent la surface supérieure (36) en lesdites travées de support (10) ; et
les portions de support (2, 4) comportent un moyen de localisation (12) pour localiser la portion de plateau supérieure (2) dans une relation de chevauchement par rapport à la portion de plateau inférieure (4).

2. Plateau selon la revendication 1, dans lequel les antennes de lecteur (14) sont positionnées pour correspondre aux travées de support (10) lorsque les portions de plateau (2, 4) sont localisées l'une par rapport à l'autre.

3. Plateau selon la revendication 1 ou 2, dans lequel chaque travée de support (10) est configurée pour loger un seul support (40) et la portion de plateau inférieure (4) comporte une dite antenne de lecteur (14) positionnée pour être sous-jacente à chacune des travées de support (10) lorsque les portions de plateau (2, 4) sont localisées l'une par rapport à l'autre.

4. Plateau selon la revendication 1, 2 ou 3, dans lequel la portion de plateau inférieure (4) comporte en outre une batterie (18) pour alimenter électriquement le moyen de traitement électronique (16).

5. Plateau selon la revendication 4, dans lequel la batterie (18) est une batterie rechargeable et la portion de plateau inférieure (4) comporte en outre une connexion de recharge de batterie (20).

6. Plateau selon l'une quelconque des revendications précédentes, dans lequel la portion de plateau supérieure (2) comporte en outre un moyen d'identification par radiofréquence (22) et la portion de plateau inférieure (4) comporte une antenne de lecteur d'identification par radiofréquence supplémentaire (24) connectée au moyen de traitement électronique (16) et agencée pour obtenir des informations en provenance du moyen d'identification par radiofréquence (22) comprenant une partie de la portion de plateau supérieure (2).

7. Plateau selon l'une quelconque des revendications précédentes, dans lequel la portion de plateau inférieure (4) comporte en outre un moyen (48) pour transférer des informations du moyen de traitement électronique (16) à un dispositif externe.

8. Plateau selon la revendication 7, dans lequel le moyen pour transférer des informations est configuré pour transférer des informations via une connexion filaire (50) ou via une connexion sans fil.

9. Plateau (1) selon l'une quelconque des revendications précédentes, en combinaison avec une station d'accueil (26), la portion de plateau inférieure (4) et la station d'accueil (26) comportant respectivement des premier et second équipements d'accueil complémentaires (30) configurés pour permettre le téléchargement d'informations depuis le dispositif de traitement électronique (16) jusqu'à ou via la station d'accueil (26).

10. Procédé de suivi de supports d'échantillon de laboratoire (40) comportant un moyen d'identification par radiofréquence (42), le procédé comportant : la fourniture d'un plateau (1) comprenant une portion de plateau supérieure (2) et une portion de plateau inférieure (4), la portion de plateau supérieure (2) ayant une base (38) avec une surface supérieure (36), et des moyens de positionnement sous forme de parois droites (6a, 6b, 8) qui divisent la surface supérieure (36) en travées de support (10) ; la localisation de la portion de plateau supérieure (2) dans une relation de chevauchement avec la portion de plateau inférieure (4) au moyen d'un moyen de localisation (12) des portions de plateau ; le positionnement de supports d'échantillon (40) dans les travées de support (10) de la portion de plateau supérieure (2) ; la lecture d'informations en provenance du moyen d'identification par radiofréquence (42) des supports (40) au moyen d'antennes de lecteur d'identification par radiofréquence (14) de la portion de plateau inférieure (4) ; et le stockage des informations au moyen d'un moyen de traitement électronique (16) de la portion de plateau inférieure (4) qui est connecté aux antennes de lecteur (14).

11. Procédé selon la revendication 10, comprenant l'étape supplémentaire d'alimentation électrique du moyen de traitement électronique (16) par une batterie (18) faisant partie de la portion de plateau inférieure (4).

12. Procédé selon la revendication 10 ou 11, comportant l'étape supplémentaire de lecture d'informations en provenance d'un moyen d'identification par radiofréquence supplémentaire (22) faisant partie de la portion de plateau supérieure (2) au moyen d'une antenne de lecteur supplémentaire (24) faisant partie de la portion de plateau inférieure (4) et connectée au moyen de traitement électronique (16) et de stockage de ces informations dans le moyen de traitement électronique (16).

13. Procédé selon la revendication 10, 11 ou 12, comportant l'étape supplémentaire de communication des informations stockées du moyen de traitement électronique (16) à un dispositif externe.

14. Procédé selon la revendication 13, dans lequel la communication des informations stockées comporte l'étape d'enclenchement d'un premier équipement d'accueil (30) de la portion de plateau inférieure (4) à un second équipement d'accueil complémentaire (30) d'une station d'accueil (26).

15. Procédé selon la revendication 13, dans lequel la communication des informations stockées comporte l'étape de leur transmission sans fil au dispositif externe.
